# EUROPEAN PATENT APPLICATION

(11) **EP 3 291 062 A1**
(43) Date of publication of application: **07.03.2018**
(21) Application number: 15893601.3
(22) Date of filing: 29.05.2015
(51) Int. Cl.: G06F 3/041

(54) **METHOD FOR ADJUSTING PHOTOGRAPHING FOCUS OF MOBILE TERMINAL THROUGH TOUCH CONTROL PANEL AND MOBILE TERMINAL**

(71) Applicant: HUAWEI TECHNOLOGIES CO., LTD., Guangdong 518129 (CN)
(72) Inventor: HUANG, Xiaoping, Shenzhen Guangdong 518129 (CN); WANG, Bin, Shenzhen Guangdong 518129 (CN)
(74) Representative: Goddar, Heinz J.
(86) International application number: PCT/CN2015/080274
(87) International publication number: WO 2016/191938

(57) **Abstract**

Embodiments of the present invention provide a method for adjusting a photographing focal length of a mobile terminal by using a touchpad, and a mobile terminal, including: when a mobile terminal enters a camera application program and displays a shooting preview screen on a display, receiving a focal length adjustment start instruction triggered by a user touching a touchpad; executing the focal length adjustment start instruction, and displaying a focal length indication bar on the display, so as to prompt the user a degree of focal length adjustment; when a finger of the user starts to move on the touchpad, obtaining gesture touch information generated by the finger operating on the touchpad; then determining a focal length adjustment instruction corresponding to the gesture touch information; and adjusting a focal length according to the focal length adjustment instruction, and displaying, on the shooting preview screen, an image that is captured after the focal length is adjusted. Problems of picture jitter and obstructing a user preview resulting from that one hand holds a mobile terminal and the other hand performs a focal length adjustment operation to adjust a focal length can be resolved.

## Description

### TECHNICAL FIELD

Embodiments of the present invention relate to a mobile terminal, and in particular, to a method for adjusting a photographing focal length of a mobile terminal by using a touchpad, and a mobile terminal.

### BACKGROUND

During shooting preview of a camera of a mobile terminal such as a mobile phone or a tablet computer, if a focal length needs to be adjusted, a user needs to use one hand to perform a touch operation on a touchpad, so as to adjust the focal length, for example, adjust the focal length by means of zooming by using two fingers, or adjust the focal length by performing a touch operation on a focal length indication bar. On one hand, in this way, the mobile terminal is likely to be unsteadily held, and even if shooting succeeds, picture jitter easily occurs. In addition, as technologies develop, a size of a mobile terminal becomes bigger, and using one hand to hold the mobile terminal to perform an operation is unsteady, and the mobile terminal easily falls off and is damaged. On the other hand, the hand that performs the touch operation may block a display and obstruct a user preview.

Therefore, to avoid the foregoing problems, during shooting preview of some mobile terminals, a focal length may be adjusted by using a volume key on a side of the mobile terminal. However, most of volume keys are mechanical keys, and the volume keys are mostly located on one side of terminal sides. When a volume key is pressed, pressing force is likely to cause picture jitter, and consequently imaging quality is poor.

### SUMMARY

Embodiments of the present invention provide a method for adjusting a photographing focal length of a mobile terminal by using a touchpad, and a mobile terminal, so as to resolve problems of picture jitter and obstructing a user preview resulting from that one hand holds a mobile terminal and the other hand performs a focal length adjustment operation to adjust a focal length.

According to a first aspect, an embodiment of the present invention provides a method for adjusting a photographing focal length of a mobile terminal by using a touchpad, where the method is applied to a mobile terminal, the mobile terminal includes a touchpad. The method includes:
when the mobile terminal enters a camera application program and displays a shooting preview screen on a display of the mobile terminal, receiving a focal length adjustment start instruction triggered by a user touching the touchpad;
executing the focal length adjustment start instruction, and displaying a focal length indication bar on the display, where the focal length indication bar is used to prompt the user a degree of focal length adjustment;
when a finger of the user starts to move on the touchpad, obtaining gesture touch information generated by the finger of the user operating on the touchpad;
determining a focal length adjustment instruction corresponding to the gesture touch information; and
adjusting a focal length according to the focal length adjustment instruction, and displaying, on the shooting preview screen, an image that is captured after the focal length is adjusted.

With reference to the first aspect, in a first possible implementation manner, if the operation is a slide operation, the obtaining gesture touch information generated by the finger of the user operating on the touchpad includes:
obtaining a sliding track that has direction information and is generated by the finger of the user sliding on the touchpad.

With reference to the first possible implementation manner of the first aspect, in a second possible implementation manner, the determining a focal length adjustment instruction corresponding to the gesture touch information includes:
determining a track length of the sliding track, and determining a slide direction of the sliding track according to the direction information;
determining a focal length adjustment direction according to the slide direction, where the focal length adjustment direction includes zooming in to increase the focal length and zooming out to decrease the focal length; and
determining, according to the track length and a preset correspondence between a track length and a focal length adjustment amount, a focal length adjustment amount corresponding to the track length, and obtaining the focal length adjustment instruction that includes the focal length adjustment direction and the focal length adjustment amount.

With reference to the second possible implementation manner of the first aspect, in a third possible implementation manner, the sliding track includes a circular track or a straight-line track; and
if the sliding track is the circular track, the slide direction is an anti-clockwise direction or a clockwise direction; or
if the sliding track is the straight-line track, the slide direction includes a first direction and a second direction, where one of the first direction and the second direction is a rightward direction along a horizontal direction of the display of the mobile terminal, and the other one is a leftward direction along the horizontal direction of the display; or one of the first direction and the second direction is a rightward direction along a vertical direction of the display, and the other one is a leftward direction along the vertical direction of the display.

With reference to the third possible implementation manner of the first aspect, in a fourth possible implementation manner, if the sliding track is the circular track, the determining a focal length adjustment direction according to the slide direction includes:
if the slide direction is the anti-clockwise direction, determining that the focal length adjustment direction is zooming out to decrease the focal length; or if the slide direction is the clockwise direction, determining that the focal length adjustment direction is zooming in to increase the focal length; or
if the slide direction is the anti-clockwise direction, determining that the focal length adjustment direction is zooming in to increase the focal length; or if the slide direction is the clockwise direction, determining that the focal length adjustment direction is zooming out to decrease the focal length; or
if the sliding track is the straight-line track, the determining a focal length adjustment direction according to the slide direction includes:
   if the slide direction is the first direction, determining that the focal length adjustment direction is zooming in to increase the focal length; or if the slide direction is the second direction, determining that the focal length adjustment direction is zooming out to decrease the focal length.

With reference to the first aspect, in a fifth possible implementation manner, if the operation is a tap operation, the obtaining gesture touch information generated by the finger of the user operating on the touchpad includes:
obtaining a quantity of taps of the tap operation performed by the finger of the user on the touchpad.

With reference to the fifth possible implementation manner, in a sixth possible implementation manner, the quantity of taps includes a tap and a double-tap, and the determining a focal length adjustment instruction corresponding to the gesture touch information includes:
if the tap operation is the tap, generating a focal length adjustment instruction that is used to instruct to zoom in to increase the focal length according to a preset unit focal length adjustment amount; or if the tap operation is the double-tap, generating a focal length adjustment instruction that is used to instruct to zoom out to decrease the focal length according to the unit focal length adjustment amount; or
if the tap operation is the tap, generating a focal length adjustment instruction that is used to instruct to zoom out to decrease the focal length according to the unit focal length adjustment amount; or if the tap operation is the double-tap, generating a focal length adjustment instruction that is used to instruct to zoom in to increase the focal length according to the unit focal length adjustment amount.

With reference to any one of the first aspect or the foregoing implementation manners, in a seventh possible implementation manner, the touchpad is a rear-facing fingerprint touchpad or a front-facing fingerprint touchpad.

According to a second aspect, a mobile terminal is provided, where the mobile terminal includes a touchpad, and the mobile terminal further includes:
a triggering unit, configured to: when the mobile terminal enters a camera application program and displays a shooting preview screen on a display of the mobile terminal, receive a focal length adjustment start instruction triggered by a user touching the touchpad;
a display unit, configured to execute the focal length adjustment start instruction, and display a focal length indication bar on the display, where the focal length indication bar is used to prompt the user a degree of focal length adjustment;
a collection unit, configured to: when a finger of the user starts to move on the touchpad, obtain gesture touch information generated by the finger of the user operating on the touchpad;
a determining unit, configured to determine a focal length adjustment instruction corresponding to the gesture touch information; and
a processing unit, configured to adjust a focal length according to the focal length adjustment instruction, and display, on the shooting preview screen, an image that is captured after the focal length is adjusted.

With reference to the second aspect, in a first possible implementation manner, if the operation is a slide operation, the collection unit is specifically configured to:
obtain a sliding track that has direction information and is generated by the finger of the user sliding on the touchpad.

With reference to the first possible implementation manner, in a second possible implementation manner, the determining unit includes:
a track recognition unit, configured to determine a track length of the sliding track, and determine a slide direction of the sliding track according to the direction information;
a zoom control unit, configured to determine a focal length adjustment direction according to the slide direction, where the focal length adjustment direction includes zooming in to increase the focal length and zooming out to decrease the focal length; and
an adjustment control unit, configured to determine, according to the track length and a preset correspondence between a track length and a focal length adjustment amount, a focal length adjustment amount corresponding to the track length, and obtain the focal length adjustment instruction that includes the focal length adjustment direction and the focal length adjustment amount.

With reference to the second aspect, in a third possible implementation manner, if the operation is a tap operation, the collection unit is specifically configured to:
obtain a quantity of taps of the tap operation performed by the finger of the user on the touchpad.

With reference to the sixth possible implementation manner, in a seventh possible implementation manner, the quantity of taps includes a tap and a double-tap, and the determining unit is specifically configured to:
if the tap operation is the tap, generate a focal length adjustment instruction that is used to instruct to zoom in to increase the focal length according to a preset unit focal length adjustment amount; or if the tap operation is the double-tap, generate a focal length adjustment instruction that is used to instruct to zoom out to decrease the focal length according to the unit focal length adjustment amount; or
if the tap operation is the tap, generate a focal length adjustment instruction that is used to instruct to zoom out to decrease the focal length according to the unit focal length adjustment amount; or if the tap operation is the double-tap, generate a focal length adjustment instruction that is used to instruct to zoom in to increase the focal length according to the unit focal length adjustment amount.

With reference to any one of the second aspect or the foregoing implementation manners, in a fourth possible implementation manner, the touchpad is a rear-facing fingerprint touchpad or a front-facing fingerprint touchpad.

According to a third aspect, a mobile terminal is provided, where the mobile terminal includes a touchpad, and the mobile terminal further includes a processor, a memory, and an interface; the processor, the memory, and the interface are connected by using a bus, the interface is configured to interact with another device, the memory is configured to store a software program, the processor is configured to execute the software program, and the processor executes the software program to:
when the mobile terminal enters a camera application program and displays a shooting preview screen on a display of the mobile terminal, receive a focal length adjustment start instruction triggered by a user touching the touchpad;
execute the focal length adjustment start instruction, and display a focal length indication bar on the display, where the focal length indication bar is used to prompt the user a degree of focal length adjustment;
when a finger of the user starts to move on the touchpad, obtain gesture touch information generated by the finger of the user operating on the touchpad;
determine a focal length adjustment instruction corresponding to the gesture touch information; and
adjust a focal length according to the focal length adjustment instruction, and display, on the shooting preview screen, an image that is captured after the focal length is adjusted.

With reference to the third aspect, in a first possible implementation manner, if the operation is a slide operation, the processor executes the software program to specifically:
obtain a sliding track that has direction information and is generated by the finger of the user sliding on the touchpad.

With reference to the first possible implementation manner, in a second possible implementation manner, the processor executes the software program to specifically:
determine a track length of the sliding track, and determine a slide direction of the sliding track according to the direction information;
determine a focal length adjustment direction according to the slide direction, where the focal length adjustment direction includes zooming in to increase the focal length and zooming out to decrease the focal length; and
determine, according to the track length and a preset correspondence between a track length and a focal length adjustment amount, a focal length adjustment amount corresponding to the track length, and obtain the focal length adjustment instruction that includes the focal length adjustment direction and the focal length adjustment amount.

With reference to the third aspect, in a third possible implementation manner, if the operation is a tap operation, the processor executes the software program to specifically:
obtain a quantity of taps of the tap operation performed by the finger of the user on the touchpad.

With reference to the sixth possible implementation manner, in a seventh possible implementation manner, the quantity of taps includes a tap and a double-tap, and the processor executes the software program to specifically:
if the tap operation is the tap, generate a focal length adjustment instruction that is used to instruct to zoom in to increase the focal length according to a preset unit focal length adjustment amount; or if the tap operation is the double-tap, generate a focal length adjustment instruction that is used to instruct to zoom out to decrease the focal length according to the unit focal length adjustment amount; or
if the tap operation is the tap, generate a focal length adjustment instruction that is used to instruct to zoom out to decrease the focal length according to the unit focal length adjustment amount; or if the tap operation is the double-tap, generate a focal length adjustment instruction that is used to instruct to zoom in to increase the focal length according to the unit focal length adjustment amount.

With reference to any one of the first aspect or the foregoing implementation manners, in a fourth possible implementation manner, the touchpad is a rear-facing fingerprint touchpad or a front-facing fingerprint touchpad.

The embodiments of the present invention provide a method for adjusting a photographing focal length of a mobile terminal by using a touchpad, and a mobile terminal, where the mobile terminal includes a touchpad. When the mobile terminal enters a camera application program and displays a shooting preview screen on a display of the mobile terminal, a focal length adjustment start instruction triggered by a user touching the touchpad is received. The focal length adjustment start instruction is executed, and a focal length indication bar is displayed on the display and is used to prompt the user a degree of focal length adjustment. When a finger of the user starts to move on the touchpad, gesture touch information, such as a sliding track or a quantity of taps, generated by the finger of the user operating on the touchpad is obtained. Then, a focal length adjustment instruction corresponding to the gesture touch information is determined. Finally, a focal length is adjusted according to the focal length adjustment instruction, and an image that is captured after the focal length is adjusted is displayed on the shooting preview screen. It can be seen that the user can adjust a photographing focal length only by using one finger, so that problems of picture jitter and obstructing a user preview resulting from that one hand holds a mobile terminal and the other hand performs a focal length adjustment operation to adjust a focal length can be resolved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic structural diagram of a mobile terminal according to an embodiment of the present invention;
FIG. 2 is a schematic flowchart of a method for adjusting a photographing focal length of a mobile terminal by using a touchpad according to an embodiment of the present invention;
FIG. 3 is a schematic flowchart of another method for adjusting a photographing focal length of a mobile terminal by using a touchpad according to an embodiment of the present invention;
FIG. 4 is a schematic diagram of a shooting preview screen according to an embodiment of the present invention;
FIG. 5 is a schematic operation diagram of a method for adjusting a photographing focal length of a terminal by using a touchpad according to an embodiment of the present invention;
FIG. 6 is another schematic operation diagram of a method for adjusting a photographing focal length of a terminal by using a touchpad according to an embodiment of the present invention;
FIG. 7 is still another schematic operation diagram of a method for adjusting a photographing focal length of a terminal by using a touchpad according to an embodiment of the present invention;
FIG. 8 is a schematic flowchart of still another method for adjusting a photographing focal length of a terminal by using a touchpad according to an embodiment of the present invention;
FIG. 9 is a schematic flowchart of yet another method for adjusting a photographing focal length of a terminal by using a touchpad according to an embodiment of the present invention;
FIG. 10 is a schematic flowchart of still yet another method for adjusting a photographing focal length of a terminal by using a touchpad according to an embodiment of the present invention;
FIG. 11 is a schematic structural diagram of another mobile terminal according to an embodiment of the present invention; and
FIG. 12 is a schematic structural diagram of still another mobile terminal according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

An embodiment of the present invention provides a mobile terminal 100. The mobile terminal may include but is not limited to a mobile phone, a tablet computer, a personal digital assistant, a point of sales (Point of Sales, POS for short), an in-vehicle computer, or the like.

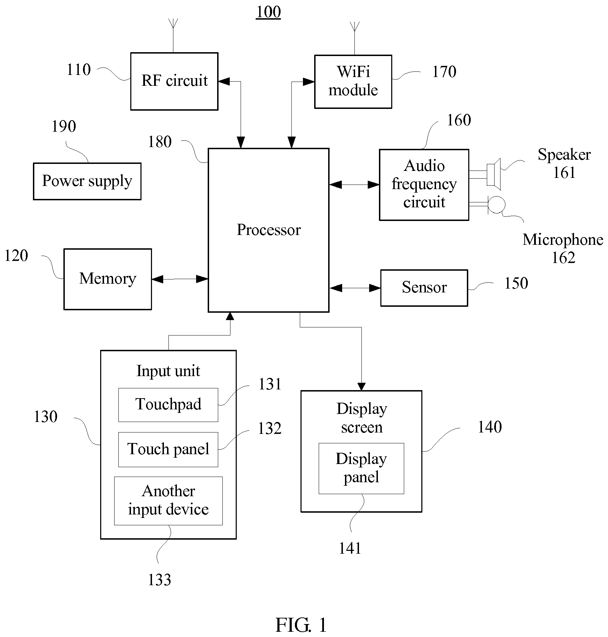

Using a mobile phone as an example of the mobile terminal 100, FIG. 1 shows a partial structural diagram of the mobile terminal 100 related to this embodiment of the present invention. Referring to FIG. 1, the mobile terminal 100 includes components such as a radio frequency (Radio Frequency, RF for short) apparatus 110, a memory 120, an input apparatus 130, a display 140, a sensor 150, an audio frequency circuit 160, a wireless fidelity (wireless fidelity, WiFi for short) module 170, a processor 180, and a power supply management unit 190. Persons skilled in the art may understand that the structure of the mobile phone shown in FIG. 1 does not constitute any limitation on the mobile phone, and instead the mobile phone may include components more or fewer than those shown in the diagram, or combine some components, or have a different component arrangement.

The following specifically describes each integral component of the mobile terminal 100 with reference to FIG. 1.

The RF circuit 110 may be configured to receive and send a signal in an information receiving or sending process or a call process. Particularly, after receiving downlink information of a base station, the RF circuit 110 sends the downlink information to the processor 180 for processing, and sends designed uplink data to the base station. Generally, the RF circuit 110 includes but is not limited to an antenna, at least one amplifier, a transceiver, a coupler, a low noise amplifier (Low Noise Amplifier, LNA for short), a duplexer, and the like. In addition, the RF circuit 110 may further communicate with a network and another device by means of wireless communication. The wireless communication may use any communications standard or protocol, which includes but is not limited to a Global System for Mobile Communications (Global System of Mobile communication, GSM for short), a general packet radio service (General Packet Radio Service, GPRS for short), Code Division Multiple Access (Code Division Multiple Access, CDMA for short), Wideband Code Division Multiple Access (Wideband Code Division Multiple Access, WCDMA for short), Long Term Evolution (Long Term Evolution, LTE for short), an email, a short messaging service (Short Messaging Service, SMS for short), and the like.

The memory 120 may be configured to store a software program and a computer instruction. By running the software program or the computer instruction stored in the memory 120, the processor 180 executes various functional applications of the mobile terminal 100 and performs data processing. The memory 120 may mainly include a program storage area and a data storage area. The program storage area may store an operating system, an application program that is required by at least one function (such as a sound playing function or an image playing function), and the like; and the data storage area may store data (such as audio data or a contact) that is created according to use of the mobile terminal 100, and the like. In addition, the memory 120 may include a high-speed random access memory, and may further include a nonvolatile memory (Non Volatile Memory, NVM for short), such as at least one magnetic disk memory component, a flash memory component, or another volatile solid-state memory component.

The input apparatus 130 may be configured to receive entered numeral or character information, and generate key signal input related to user setting and functional control of the mobile terminal 100. Specifically, the input apparatus 130 may include a touchpad 131, a touch panel 132, and another input apparatus 133. The touchpad 131 may be a fingerprint touchpad, and the fingerprint touchpad can recognize a fingerprint of a user and can further receive a touch operation of the user. The fingerprint touchpad may be a front-facing fingerprint touchpad or a rear-facing fingerprint touchpad. In this embodiment, to facilitate focal length adjustment, a rear-facing touchpad may be used. The touch panel 132 can collect a touch operation (for example, an operation of the user on the touch panel 132 or near the touch panel 132 by using any proper object or accessory, such as a finger or a stylus) of the user on or near the touch panel 132, and drive a corresponding connected apparatus according to a preset program. Optionally, the touch panel 132 may include two parts: a touch detection apparatus and a touch controller. The touch detection apparatus detects a touch position of the user, detects a signal brought by a touch operation, and transfers the signal to the touch controller. The touch controller receives touch information from the touch detection apparatus, converts the touch information into coordinates of a touch point, then sends the coordinates of the touch point to the processor 180, and can receive and execute a command sent by the processor 180. In addition, the touch panel 132 may be implemented in multiple types, such as a resistive type, a capacitive type, an infrared ray, and a surface acoustic wave. The input apparatus 130 may include the another input device 133 in addition to the touch panel 132. Specifically, the another input device 133 may include but is not limited to one or more of a physical keyboard, a function key (such as a volume control key or an on/off key), a trackball, a mouse, an operating lever, or the like.

The display 140 may be configured to display information entered by the user or information provided for the user, and various menus of the mobile terminal 100. The display 140 may include a display panel 141. Optionally, a form such as a liquid crystal display (Liquid Crystal Display, LCD for short) or an organic light-emitting diode (Organic Light-Emitting Diode, OLED for short) may be used to configure the display panel 141. Further, the touch panel 132 may cover the display panel 141. When detecting a touch operation on or near the touch panel 132, the touch panel 132 transfers the touch operation to the processor 180 to determine a type of a touch event, and then the processor 180 provides corresponding visual output on the display panel 141 according to the type of the touch event. In FIG. 1, the touch panel 132 and the display panel 141 are used as two independent components to implement input and output functions of the mobile terminal 100; however, in some embodiments, the touch panel 132 and the display panel 141 may be integrated to implement the input and output functions of the mobile terminal 100.

The mobile terminal 100 may further include at least one type of sensor 150, such as a light sensor, a motion sensor, and another sensor. Specifically, the light sensor may include an ambient light sensor and a proximity sensor. The ambient light sensor may adjust luminance of the display panel 141 according to brightness of ambient light, and when the mobile terminal 100 moves to an ear, the proximity sensor may turn off the display panel 141 and/or backlight. As one type of a motion sensor, an accelerometer sensor can detect a value of acceleration in each direction (generally, three axes), can detect a value and a direction of gravity in static mode, and can be used for an application that identifies a phone gesture (such as screen switching between a landscape mode and a portrait mode, a related game, and magnetometer gesture calibration), a function related to vibration recognition (such as a pedometer or a stroke), and the like. For the mobile terminal 100, a gyroscope, a barometer, a hygrometer, a thermometer, an infrared sensor, and other sensors can be further configured, which are not repeatedly described in detail herein.

The audio frequency circuit 160, a speaker 161, and a microphone 162 may provide an audio interface between the user and the mobile terminal 100. The audio frequency circuit 160 may transmit, to the speaker 161, an electrical signal converted from received audio data, and the speaker 161 converts the electrical signal into a sound signal for output. In another aspect, the microphone 162 converts a collected sound signal into an electrical signal; after being received by the frequency circuit 160, the electrical signal is converted into audio data; and the audio data is output to an RF circuit 108 for sending to, for example, another mobile phone, or the audio data is output to the memory 120 for further processing.

WiFi belongs to a short-distance wireless transmission technology. The mobile terminal 100 may use the WiFi module 170 to help the user receive and send an email, browse a web page, gain access to streaming media, and the like. The WiFi module 170 provides the user with wireless broadband Internet access. Although FIG. 1 shows the WiFi module 170, it may be understood that, the WiFi module 170 is not a mandatory part of the mobile terminal 100, and may completely be omitted according to a need without changing the essence of the present invention.

The processor 180 is a control center of the mobile terminal 100, connects to various parts of the entire mobile phone by using various interfaces and cables, and by running or executing a software program or a module or both that are stored in the memory 120 and by invoking data stored in the memory 120, executes various functions of the mobile terminal 100 and processing data, so as to perform overall monitoring on the mobile phone. Optionally, the processor 180 may include one or more processing units. Preferably, an application processor and a modem processor may be integrated into the processor 180. The application processor mainly processes an operating system, a user interface, an application program, and the like; and the modem processor mainly processes wireless communications. It may be understood that the foregoing modem processor may not be integrated into the processor 180.

The mobile terminal 100 further includes the power supply 190 (such as a battery) that supplies power to each component. Preferably, the power supply may be logically connected to the processor 180 by using a power supply management system, so as to implement functions such as management of charging, discharging, and power consumption by using the power supply management system.

Although not shown in the figure, the mobile terminal 100 may further include a camera, a Bluetooth module, and the like, which are not repeatedly described herein.

The following describes in detail the mobile terminal that is provided in this embodiment and on which a photographing focal length can be adjusted by using the touchpad.

When a user of the mobile terminal 100 wants to take a photograph, the user needs to use a finger to tap an icon of a camera application program that is displayed on the display 140. In this case, the touch panel 132 that covers the display panel 141 detects the tap operation of the finger of the user, generates a touch signal, and transmits the touch signal to the processor 180. The processor 180 determines a type of a touch event according to the touch signal, and the processor 180 runs the camera application program after determining that the touch event is that the user taps the camera application program.

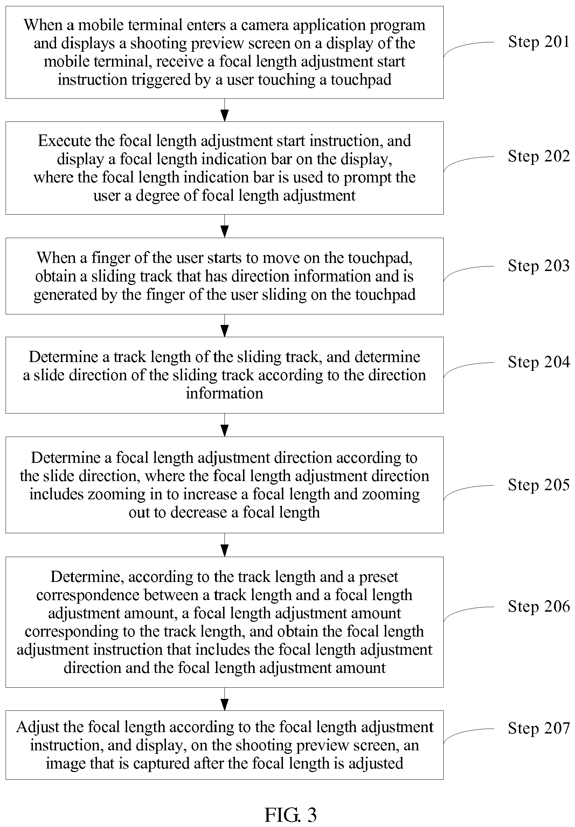

In this case, the mobile terminal 100 enters the camera application program and displays a shooting preview screen on the display 140 of the mobile terminal 100, and an image that is captured by the camera is displayed on the shooting preview screen. When the user needs to adjust a photographing focal length, a finger needs to be placed on the touchpad 131, and when the user puts the finger on the touchpad 131, the touchpad 131 is triggered to generate a focal length adjustment start instruction and transmits the focal length adjustment start instruction to the processor 180. Then, the processor 180 executes the focal length adjustment start instruction. The processor sends a display instruction to the display panel 141, and the display panel 141 executes the display instruction to display a focal length indication bar on the shooting preview screen that is displayed on the display 140. As shown in FIG. 3, the focal length indication bar is used to prompt the user a degree of focal length adjustment.

When the finger of the user starts to move on the touchpad 131, the touchpad 131 obtains gesture touch information generated by the finger of the user operating on the touchpad 131. The touch information may be a sliding track that has direction information, such as a circular track or a straight-line track. In addition, the sliding track may also be another track, such as an ellipse track, a square track, or an arc track. An implementation method of a closed sliding track such as the ellipse track or the square track is the same as that of the circular track, and an implementation method of an unclosed sliding track such as the arc track is the same as that of the straight-line track. Alternatively, the gesture touch information may be a quantity of taps.

Then, the touchpad 131 sends the obtained gesture touch information to the processor 180, and the processor 180 determines a focal length adjustment instruction corresponding to the gesture touch information, and transmits the focal length adjustment instruction to the camera.

Finally, the camera adjusts the focal length according to the focal length adjustment instruction, and returns, to the processor 180, an image that is captured after the focal length is adjusted. By using the display panel 141, the processor 180 displays, on the shooting preview screen that is on the display 140, the image that is captured after the focal length is adjusted.

The following describes in detail a process in which the processor 180 determines the focal length adjustment instruction corresponding to the gesture touch information.

Whether the foregoing gesture touch information is a sliding track that has direction information or a quantity of taps depends on an operation that the finger of the user performs on the touchpad 131. If the operation is a slide operation, the processor 180 obtains a sliding track that has direction information and is generated by the finger of the user sliding on the touchpad 131.

After obtaining the sliding track that has the direction information, the processor 180 is specifically configured to:
determine a track length of the sliding track, and determine a slide direction of the sliding track according to the direction information. For example, if the finger of the user performs straight-line sliding on the touchpad 131, the processor 180 may determine the track length and the slide direction of the sliding track according to start-point coordinates and end-point coordinates of the straight-line sliding performed by the finger of the user on the touchpad 131. If the finger of the user performs circular sliding on the touchpad 131, the processor 180 may calculate the track length in the following manner: A unit track length is preset to one circle of circular sliding on the touchpad 131, and the track length of the sliding track can be obtained according to a quantity of circles that the finger of the user slides and the unit track length. In addition, whether the slide direction is clockwise or anti-clockwise can be determined according to start-point time and end-point time of the straight-line sliding performed by the finger on the touchpad 131. Alternatively, by performing sampling on the track in a finger sliding process, the processor 180 can obtain, by means of calculation, the track length and the slide direction of the sliding track according to coordinates and time of a sampling point. Certainly, the foregoing methods are merely examples, which are included but are not limited thereto.

After determining the slide direction, the processor 180 accesses a correspondence that is between a slide direction and a focal length adjustment direction and pre-stored in the memory 120, and determines, according to the correspondence, a focal length adjustment direction by using the determined slide direction, where the focal length adjustment direction includes zooming in to increase the focal length and zooming out to decrease the focal length.

For example, if the sliding track is a circular track, the slide direction may be an anti-clockwise direction or a clockwise direction.

If the slide direction is the anti-clockwise direction, the processor 180 determines that the focal length adjustment direction is zooming out to decrease the focal length; or if the slide direction is the clockwise direction, the processor 180 determines that the focal length adjustment direction is zooming in to increase the focal length.

Alternatively, if the slide direction is the anti-clockwise direction, the processor 180 determines that the focal length adjustment direction is zooming in to increase the focal length; or if the slide direction is the clockwise direction, the processor 180 determines that the focal length adjustment direction is zooming out to decrease the focal length.

If the sliding track is the straight-line track, the slide direction includes a first direction and a second direction. One of the first direction and the second direction is a rightward direction along a horizontal direction of the display 140 of the mobile terminal, and the other one is a leftward direction along the horizontal direction of the display 140; or one of the first direction and the second direction is a rightward direction along a vertical direction of the display 140, and the other one is a leftward direction along the vertical direction of the display 140.

If the slide direction is the first direction, the processor 180 determines that the focal length adjustment direction is zooming in to increase the focal length; or if the slide direction is the second direction, the processor 180 determines that the focal length adjustment direction is zooming out to decrease the focal length.

Certainly, the foregoing correspondence between a slide direction and a focal length adjustment direction is merely an example, which is included but is not limited thereto.

After determining the focal length adjustment direction, the processor 180 determines, according to the obtained track length and a preset correspondence between a track length and a focal length adjustment amount, a focal length adjustment amount corresponding to the track length, and obtain the focal length adjustment instruction that includes the focal length adjustment direction and the focal length adjustment amount.

Alternatively, in another implementation manner, the processor 180 may determine a relative track length of the sliding track in a sliding process of the finger of the user, and determine the slide direction of the sliding track according to the direction information. The relative track length is a track length of the finger of the user sliding from a position at which the finger of the user is located when a last focal length adjustment instruction is generated to a current position of the finger of the user. A method for determining the slide direction is the same as the foregoing method, which is not repeatedly described herein.

After determining the slide direction, the processor 180 accesses a correspondence that is between a slide direction and a focal length adjustment direction and pre-stored in the memory 120, and determines, according to the correspondence, a focal length adjustment direction by using the determined slide direction. The focal length adjustment direction includes zooming in to increase the focal length and zooming out to decrease the focal length. The specific method is the same as the foregoing method, which is not repeatedly described herein.

After determining the focal length adjustment direction, the processor 180 determines whether the relative track length reaches a preset unit length. If the unit length is reached, the processor 180 generates the focal length adjustment instruction. The focal length adjustment instruction includes the focal length adjustment direction and a preset unit focal length adjustment amount; and executes again the step of determining the slide direction and the relative track length of the sliding track. A benefit of using this implementation manner is that a photographing focal length may be increased or decreased with sliding of the finger of the user. A focal length adjustment instruction is generated every time upon a change of one unit focal length adjustment amount. Therefore, an effect reflected on the display 140 is that an image on the shooting preview screen changes with the sliding of the finger of the user, and when the finger of the user stops sliding, focal length adjustment also stops accordingly, thereby more facilitating the user in controlling a degree of focal length adjustment.

If an operation performed by the finger of the user on the touchpad 131 is the tap operation, the gesture touch information obtained by the processor 180 from the touchpad 131 is a quantity of taps of the tap operation performed by the finger of the user on the touchpad 131.

The quantity of taps includes a tap and a double-tap. After obtaining the quantity of taps, the processor 180 accesses the memory 120 to obtain a correspondence that is between the quantity of taps and a focal length adjustment direction and stored in the memory 120, and a unit focal length adjustment amount for adjusting a focal length once, which are used to generate a focal length adjustment instruction.

Specifically, if the tap operation is the tap, the processor 180 generates a focal length adjustment instruction that is used to instruct to zoom in to increase the focal length according to a preset unit focal length adjustment amount; or if the tap operation is the double-tap, the processor 180 generates a focal length adjustment instruction that is used to instruct to zoom out to decrease the focal length according to the unit focal length adjustment amount; or
if the tap operation is the tap, the processor 180 generates a focal length adjustment instruction that is used to instruct to zoom out to decrease the focal length according to the unit focal length adjustment amount; or if the tap operation is the double-tap, the processor 180 generates a focal length adjustment instruction that is used to instruct to zoom in to increase the focal length according to the unit focal length adjustment amount.

Certainly, the foregoing method for determining a focal length adjustment instruction according to the quantity of taps is merely an example, which is included but is not limited thereto. In addition, the foregoing process executed by the processor may be stored in the memory 120 in a form of a software program. The software program may be a part of the camera application program. When the finger of the user taps the icon of the camera application program displayed on the display 140, after the camera application program starts to run and when the finger of the user touches the touchpad 131, the processor 180 runs the software program to execute the foregoing process.

Optionally, the touchpad 131 may be a rear-facing fingerprint touchpad or a front-facing fingerprint touchpad.

This embodiment of the present invention provides a mobile terminal, and the mobile terminal includes a touchpad. When the mobile terminal enters a camera application program and displays a shooting preview screen on a display of the mobile terminal, a focal length adjustment start instruction triggered by a user touching the touchpad is received. The focal length adjustment start instruction is executed, and a focal length indication bar is displayed on the display and is used to prompt the user a degree of focal length adjustment. When a finger of the user starts to move on the touchpad, gesture touch information, such as a sliding track or a quantity of taps, generated by the finger of the user operating on the touchpad is obtained. Then, a focal length adjustment instruction corresponding to the gesture touch information is determined. Finally, a focal length is adjusted according to the focal length adjustment instruction, and an image that is captured after the focal length is adjusted is displayed on the shooting preview screen. It can be seen that the user can adjust a photographing focal length only by using one finger, so that problems of picture jitter and obstructing a user preview resulting from that one hand holds a mobile terminal and the other hand performs a focal length adjustment operation to adjust a focal length can be resolved.

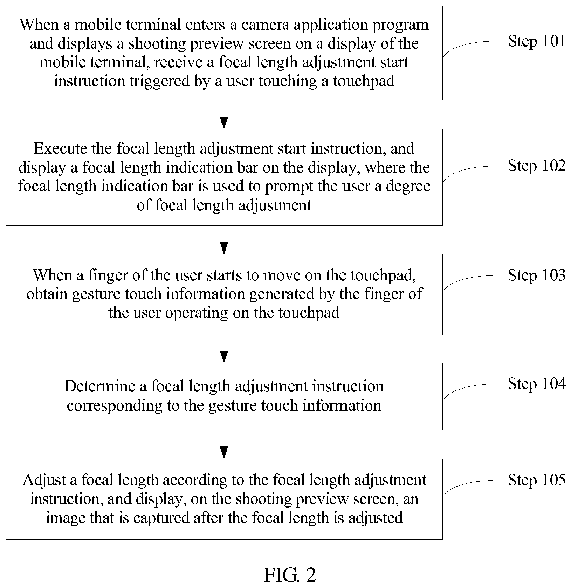

An embodiment of the present invention provides a method for adjusting a photographing focal length of a mobile terminal by using a touchpad. As shown in FIG. 2, the method includes:
Step 101: When the mobile terminal enters a camera application program and displays a shooting preview screen on a display of the mobile terminal, receive a focal length adjustment start instruction triggered by a user touching the touchpad.
Step 102: Execute the focal length adjustment start instruction, and display a focal length indication bar on the display, where the focal length indication bar is used to prompt the user a degree of focal length adjustment.
Step 103: When a finger of the user starts to move on the touchpad, obtain gesture touch information generated by the finger of the user operating on the touchpad.
Step 104: Determine a focal length adjustment instruction corresponding to the gesture touch information.
Step 105: Adjust a focal length according to the focal length adjustment instruction, and display, on the shooting preview screen, an image that is captured after the focal length is adjusted.

This embodiment of the present invention provides a method for adjusting a photographing focal length of a mobile terminal by using a touchpad, where the mobile terminal includes a touchpad. When the mobile terminal enters a camera application program and displays a shooting preview screen on a display of the mobile terminal, a focal length adjustment start instruction triggered by a user touching the touchpad is received. The focal length adjustment start instruction is executed, and a focal length indication bar is displayed on the display and is used to prompt the user a degree of focal length adjustment. When a finger of the user starts to move on the touchpad, gesture touch information, such as a sliding track or a quantity of taps, generated by the finger of the user operating on the touchpad is obtained. Then, a focal length adjustment instruction corresponding to the gesture touch information is determined. Finally, a focal length is adjusted according to the focal length adjustment instruction, and an image that is captured after the focal length is adjusted is displayed on the shooting preview screen. It can be seen that the user can adjust a photographing focal length only by using one finger, so that problems of picture jitter and obstructing a user preview resulting from that one hand holds a mobile terminal and the other hand performs a focal length adjustment operation to adjust a focal length can be resolved.

To make persons skilled in the art more clearly understand technical solutions provided in the embodiments of the present invention, the following describes in detail, by using specific embodiments, a method for adjusting a photographing focal length of a mobile terminal by using a touchpad according to an embodiment of the present invention. In this embodiment, a slide operation and a tap operation are separately used as an example to describe an operation performed by a finger of a user on the touchpad. As shown in FIG. 3, if the operation performed by the finger of the user on the touchpad is the slide operation, the method includes the following steps.
Step 201: When the mobile terminal enters a camera application program and displays a shooting preview screen on a display of the mobile terminal, receive a focal length adjustment start instruction triggered by a user touching the touchpad.
Step 202: Execute the focal length adjustment start instruction, and display a focal length indication bar on the display, where the focal length indication bar is used to prompt the user a degree of focal length adjustment.

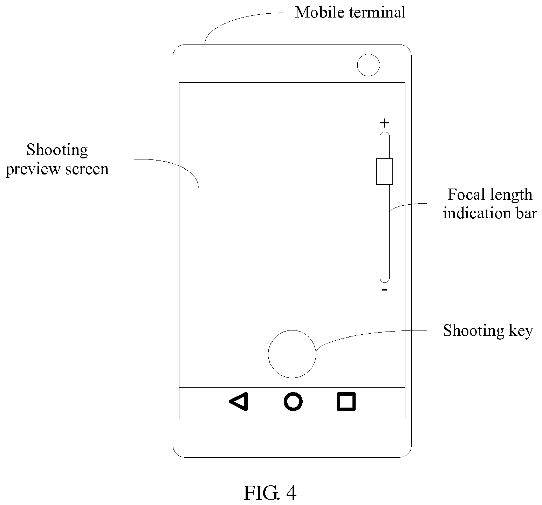

For example, FIG. 4 is a schematic diagram of the shooting preview screen, and the focal length indication bar may be that shown in FIG. 3, so as to prompt the user the degree of focal length adjustment.
Step 203: When a finger of the user starts to move on the touchpad, obtain a sliding track that has direction information and is generated by the finger of the user sliding on the touchpad.

The touchpad may be a front-facing touchpad or a rear-facing touchpad of the mobile terminal. The touchpad may be an existing touchpad of the mobile terminal, for example, a front-facing fingerprint touchpad or a rear-facing fingerprint touchpad. A benefit of using a fingerprint touchpad is that no new touchpad needs to be additionally disposed on the mobile terminal. For example, in this embodiment, a rear-facing fingerprint touchpad is used as an example for description.

The sliding track includes a circular track and a straight-line track, but is not limited herein. The sliding track may also be another track, such as an ellipse track, a square track, or an arc track. An implementation method of a closed sliding track such as the ellipse track or the square track is the same as that of the circular track, and an implementation method of an unclosed sliding track such as the arc track is the same as that of the straight-line track. Therefore, a circular track and a straight-line track are separately used as an example for description in the following.
Step 204: Determine a track length of the sliding track, and determine a slide direction of the sliding track according to the direction information.

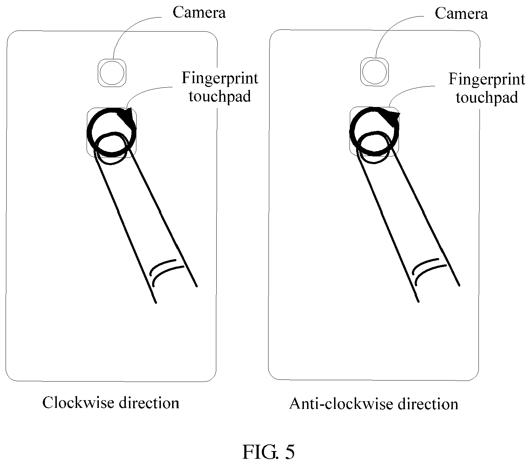

If the sliding track is the circular track, the slide direction is an anti-clockwise direction or a clockwise direction. A rear view of the mobile terminal is shown in FIG. 5.

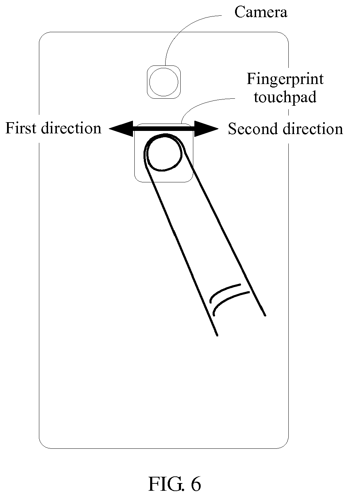

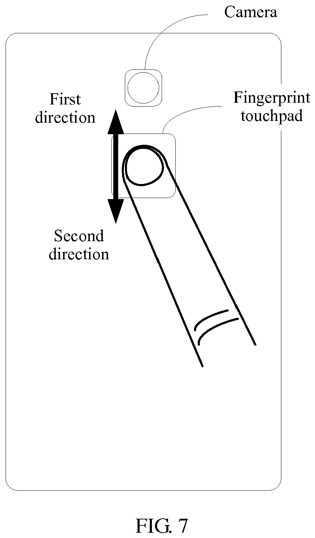

If the sliding track is the straight-line track, the slide direction includes a first direction and a second direction, where one of the first direction and the second direction is a rightward direction along a horizontal direction of the display of the mobile terminal, and the other one is a leftward direction along the horizontal direction of the display, which is shown in FIG. 6; or
one of the first direction and the second direction is a rightward direction along a vertical direction of the display, and the other one is a leftward direction along the vertical direction of the display, which is shown in FIG. 7.

The track length refers to a total length of the sliding track. It should be understood that, if a sliding track is a circular track, the sliding track is obtained by a finger of a user drawing a circle on the touchpad. There may be one circle, or drawing a circle may be repeated. When drawing a circle is repeated, the track is overlaid. Therefore, if the sliding track is the circular track, the track length should be a sum of perimeters of all circles drawn by the finger of the user on the touchpad.
Step 205: Determine a focal length adjustment direction according to the slide direction, where the focal length adjustment direction includes zooming in to increase the focal length and zooming out to decrease the focal length.

For example, when the sliding track is the circular track:
if the slide direction is the anti-clockwise direction, it is determined that the focal length adjustment direction is zooming out to decrease the focal length; or if the slide direction is the clockwise direction, it is determined that the focal length adjustment direction is zooming in to increase the focal length; or
if the slide direction is the anti-clockwise direction, it is determined that the focal length adjustment direction is zooming in to increase the focal length; or if the slide direction is the clockwise direction, it is determined that the focal length adjustment direction is zooming out to decrease the focal length; or
when the sliding track is the straight-line track:
   if the slide direction is the first direction, it is determined that the focal length adjustment direction is zooming in to increase the focal length; or if the slide direction is the second direction, it is determined that the focal length adjustment direction is zooming out to decrease the focal length.

It may be understood that, whether the first direction and the second direction are along the vertical direction or the horizontal direction of the display, one direction of the first direction and the second direction is zooming out to decrease the focal length, and the other direction is zooming in to increase the focal length.

Any one or all of the foregoing solutions for adjusting the focal length by sliding a circular track or a straight-line track on the fingerprint touchpad may be selected. Specifically, all the foregoing solutions may be embedded in the mobile terminal, so that the user performs selection from options of the camera application. From the foregoing several correspondences between a sliding direction and a focal length adjustment direction, one correspondence may be pre-selected and set in the mobile terminal; or all the foregoing several correspondences between a sliding direction and a focal length adjustment direction may be set in the mobile terminal, so that the user performs selection from options of the camera application; or further, the user may randomly set a correspondence according to a usage habit of the user.
Step 206: Determine, according to the track length and a preset correspondence between a track length and a focal length adjustment amount, a focal length adjustment amount corresponding to the track length, and obtain the focal length adjustment instruction that includes the focal length adjustment direction and the focal length adjustment amount.

The correspondence between a track length and a focal length adjustment amount refers to a correspondence between different track lengths and different focal length adjustment amounts. For example, whether the focal length is increased by zooming in or the focal length is decreased by zooming out, a longer track length corresponds to a larger focal length adjustment amount, and a shorter track length corresponds to a smaller focal length adjustment amount. The focal length adjustment amount may refer to a multiple of a focal length change. It is assumed that a camera of the mobile terminal is a 4 x zoom camera, a default focal length is a 1x focal length (which may generally be expressed as 1.0x) when the camera application is started, and every time the track length is increased by a unit length, the focal length is increased by a unit multiple. For example, the unit length may be set to 0.3 cm, and the unit multiple may be set to a 0.1 multiple. If the track length is 1.5 cm, the focal length needs to be increased by a 0.4 multiple to be changed to a 1.4 multiple of the default focal length (which may be expressed as 1.4x). The rest may be deduced by analogy, and the focal length may be increased by a maximum of a 4 multiple of the default focal length (which may be expressed as 4.0x). Certainly, the foregoing specific data is merely an example and imposes no limitation on this embodiment. A specific value may be set according to an actual requirement.

If the unit multiple remains unchanged, a shorter unit length provides higher sensitivity of focal length adjustment, and a longer unit length provides lower sensitivity of focal length adjustment. Because an area of the fingerprint touchpad is relatively small, if the solution of sliding a circular track is used, the unit length may be set to be relatively long; or if the solution of sliding a straight-line track is used, the unit length may be set to be relatively short.

After the focal length adjustment direction is determined and the focal length adjustment amount is obtained, the focal length adjustment instruction that includes the focal length adjustment direction and the focal length adjustment amount is obtained.
Step 207: Adjust the focal length according to the focal length adjustment instruction, and display, on the shooting preview screen, an image that is captured after the focal length is adjusted.

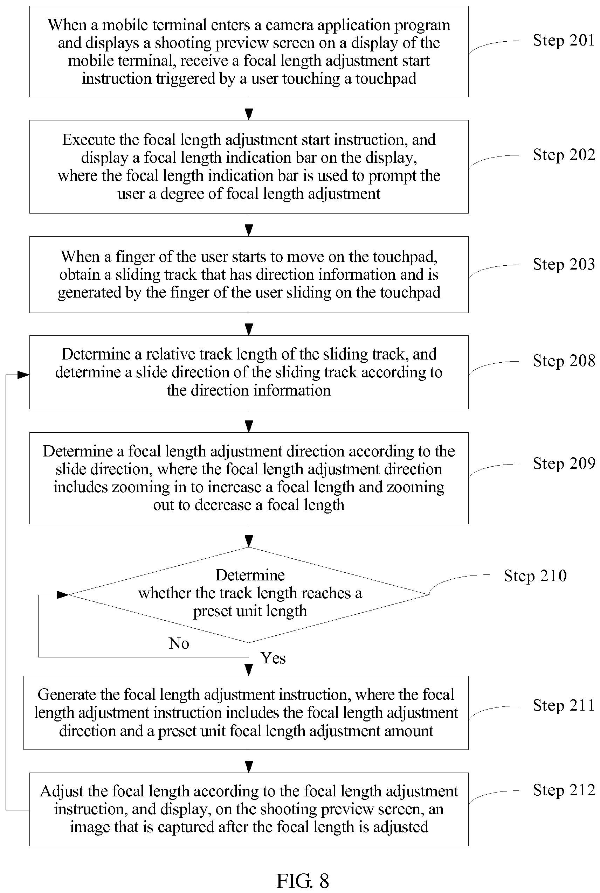

Alternatively, in another implementation manner, as shown in FIG. 8, the following steps may be executed after step 203.
Step 208: Determine a relative track length of the sliding track, and determine a slide direction of the sliding track according to the direction information.

The relative track length is a track length of the finger of the user sliding from a position at which the finger of the user is located when a last focal length adjustment instruction is generated to a current position of the finger of the user.
Step 209: Determine a focal length adjustment direction according to the slide direction, where the focal length adjustment direction includes zooming in to increase the focal length and zooming out to decrease the focal length (which is completely the same as step 205; reference may be made to step 205, and details are not repeatedly described).
Step 210: Determine whether the track length reaches a preset unit length.

If the unit length is reached, step 211 is executed; or if the unit length is not reached, step 210 is executed again.
Step 211: Generate the focal length adjustment instruction, where the focal length adjustment instruction includes the focal length adjustment direction and a preset unit focal length adjustment amount. After step 211 is executed, step 212 is executed, and step 208 to step 212 are executed again.
Step 211 is similar to step 206. The focal length adjustment amount may refer to a multiple of a focal length change, and the unit focal length adjustment amount may be understood as a unit multiple of a focal length change. Therefore, step 210 may be understood as that, every time the track length is increased by a unit length, a focal length adjustment instruction is generated, so that every time the track length is increased by a unit length, the focal length is adjusted by a unit multiple. For example, it is still assumed that the camera of the mobile terminal is a 4 x zoom camera, and a default focal length is a 1x focal length (which may generally be expressed as 1.0x) when the camera application is started. The unit length may be set to 0.3 cm, and the unit multiple may be set to a 0.1 multiple. Calculation starts when the finger of the user starts to slide on the fingerprint touchpad. When the sliding track length reaches 0.3 cm, a focal length adjustment instruction is generated and is used to instruct to zoom in to increase the focal length by a 0.1 multiple, and the increased focal length is a 1.1 multiple of the default focal length (which may be expressed as 1.1x). After the focal length adjustment instruction is generated, the length of the track that the finger of the user slides is recounted. When the sliding track length reaches 0.3 cm again, a focal length adjustment instruction is regenerated and instructs to zoom in to increase the focal length by a 0.1 multiple, and the increased focal length is a 1.2 multiple of the default focal length (which may be expressed as 1.2x). The rest may be deduced by analogy, and the focal length may be increased by a maximum of a 4 multiple of the default focal length (which may be expressed as 4.0x). Certainly, the foregoing specific data is merely an example and imposes no limitation on this embodiment. A specific value may be set according to an actual requirement.

If the unit multiple remains unchanged, a shorter unit length provides higher sensitivity of focal length adjustment, and a longer unit length provides lower sensitivity of focal length adjustment. Because an area of the fingerprint touchpad is relatively small, if the solution of sliding a circular track is used, the unit length may be set to be relatively long; or if the solution of sliding a straight-line track is used, the unit length may be set to be relatively short.
Step 212: Adjust the focal length according to the focal length adjustment instruction, and display, on the shooting preview screen, an image that is captured after the focal length is adjusted.

Specifically, as described in step 208 to step 211, every time the track length is increased by a unit length, a focal length adjustment instruction is generated, so that every time the track length is increased by a unit length, the focal length is adjusted by a unit multiple. Every time after the focal length is adjusted according to the focal length adjustment instruction, an image captured after the adjustment is displayed on the shooting preview screen.

Further, prompt information about a current focal length may further be displayed on the shooting preview screen. For example, the camera of the mobile terminal is a 4 x zoom camera, and if a current focal length is a 2 multiple of the default focal length, "2.0x" is displayed on the shooting preview screen (for example, an upper left corner or an upper right corner of the interface).

Therefore, it can be implemented that, as the finger of the user slides, an image on the shooting preview screen changes in real time as the focal length changes, so that the user can see images corresponding to different focal lengths on the shooting preview screen. When a focal length required by the user is reached, adjustment can be stopped in time, so that a focal length adjustment process is faster, easier, and more convenient.

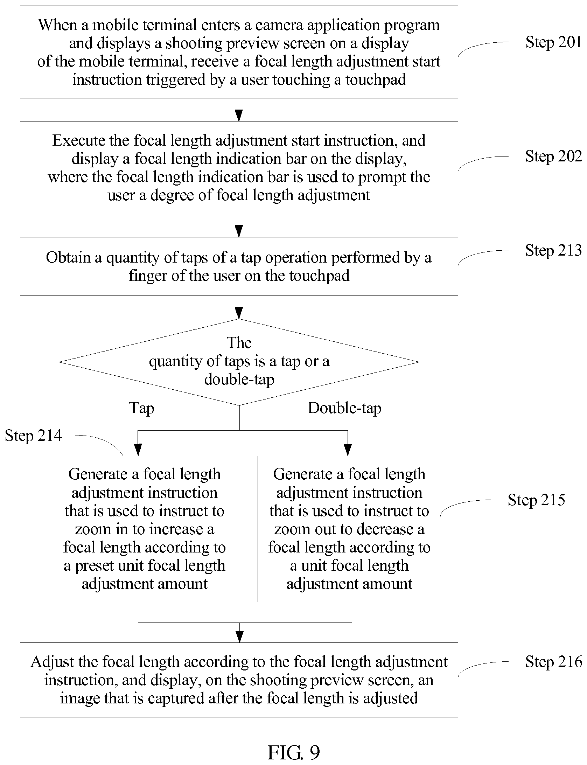

Alternatively, as shown in FIG. 9, if the operation performed by the finger of the user on the touchpad is the tap operation, after step 202, the method includes the following steps.
Step 213: Obtain a quantity of taps of a tap operation performed by a finger of the user on the touchpad.

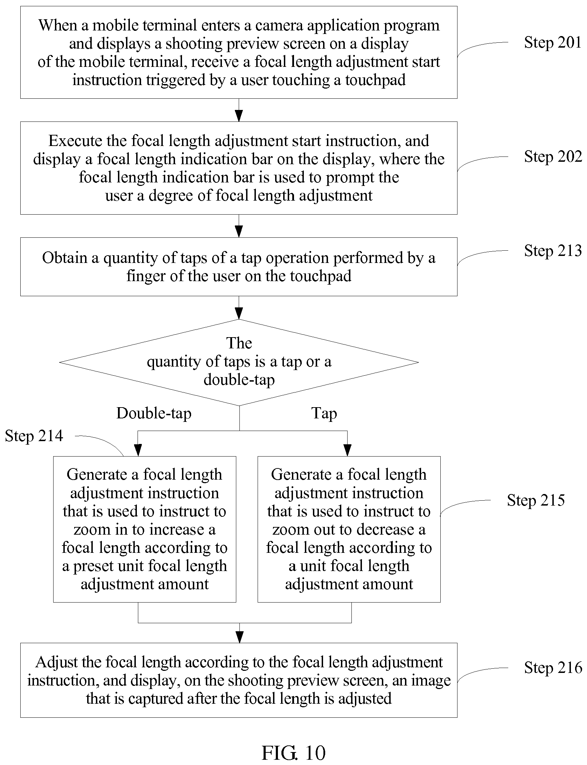

The quantity of taps may be a tap or a double-tap, and if the tap operation is the tap, step 214 is executed, or if the tap operation is the double-tap, step 215 is executed. Alternatively, as shown in FIG. 10, if the tap operation is the tap, step 215 is executed, or if the tap operation is the double-tap, step 214 is executed.
Step 214: Generate a focal length adjustment instruction that is used to instruct to zoom in to increase a focal length according to a preset unit focal length adjustment amount.
Step 215: Generate a focal length adjustment instruction that is used to instruct to zoom out to decrease a focal length according to the unit focal length adjustment amount.

Similar to step 211, the unit focal length adjustment amount may be understood as a unit multiple of a focal length change. Therefore, every time the user performs a tap operation, a focal length adjustment instruction is generated, and the focal length is increased or decreased according to the unit focal length adjustment amount, so that every time the user performs a tap operation, the focal length is adjusted by a unit multiple. For example, it is still assumed that the camera of the mobile terminal is a 4 x zoom camera, and a default focal length is a 1x focal length (which may generally be expressed as 1.0x) when the camera application is started. The unit multiple may be set to a 0.1 multiple. Every time the user performs a tap on the fingerprint touchpad, a focal length adjustment instruction is generated and is used to instruct to zoom in to increase the focal length by a 0.1 multiple, and the increased focal length is a 1.1 multiple of the default focal length (which may be expressed as 1.1x). The rest may be deduced by analogy, and the focal length may be increased by a maximum of a 4 multiple of the default focal length (which may be expressed as 4.0x). Every time the user performs a double-tap on the fingerprint touchpad, a focal length adjustment instruction is generated and is used to instruct to zoom out to decrease the focal length by a 0.1 multiple. For example, a current focal length is a 2 multiple of the default focal length (which may be expressed as 2.0x), and when the user performs a double-tap on the fingerprint touchpad, the focal length becomes a 1.9 multiple of the default focal length (which may be expressed as 1.9x). Certainly, the foregoing specific data is merely an example and imposes no limitation on this embodiment. A specific adjustment granularity may be set according to an actual requirement.
Step 216: Adjust the focal length according to the focal length adjustment instruction, and display, on the shooting preview screen, an image that is captured after the focal length is adjusted.

This embodiment of the present invention provides a method for adjusting a photographing focal length of a mobile terminal by using a touchpad, where the mobile terminal includes a touchpad. When the mobile terminal enters a camera application program and displays a shooting preview screen on a display of the mobile terminal, a focal length adjustment start instruction triggered by a user touching the touchpad is received. The focal length adjustment start instruction is executed, and a focal length indication bar is displayed on the display and is used to prompt the user a degree of focal length adjustment. When a finger of the user starts to move on the touchpad, gesture touch information, such as a sliding track or a quantity of taps, generated by the finger of the user operating on the touchpad is obtained. Then, a focal length adjustment instruction corresponding to the gesture touch information is determined. Finally, a focal length is adjusted according to the focal length adjustment instruction, and an image that is captured after the focal length is adjusted is displayed on the shooting preview screen. It can be seen that the user can adjust a photographing focal length only by using one finger, so that problems of picture jitter and obstructing a user preview resulting from that one hand holds a mobile terminal and the other hand performs a focal length adjustment operation to adjust a focal length can be resolved.

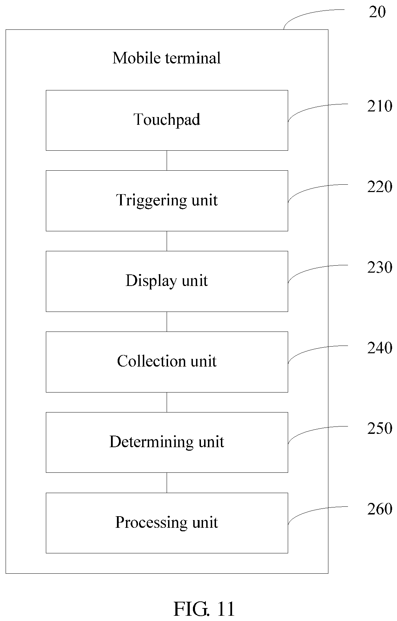

An embodiment of the present invention provides a mobile terminal 20, where the mobile terminal includes a touchpad 210. As shown in FIG. 11, the mobile terminal 20 further includes:
a triggering unit 220, configured to: when the mobile terminal enters a camera application program and displays a shooting preview screen on a display of the mobile terminal, receive a focal length adjustment start instruction triggered by a user touching the touchpad;
a display unit 230, configured to execute the focal length adjustment start instruction, and display a focal length indication bar on the display, where the focal length indication bar is used to prompt the user a degree of focal length adjustment;
a collection unit 240, configured to: when a finger of the user starts to move on the touchpad, obtain gesture touch information generated by the finger of the user operating on the touchpad;
a determining unit 250, configured to determine a focal length adjustment instruction corresponding to the gesture touch information; and
a processing unit 260, configured to adjust a focal length according to the focal length adjustment instruction, and display, on the shooting preview screen, an image that is captured after the focal length is adjusted.

Optionally, if the operation is a slide operation, the collection unit 240 is specifically configured to:
obtain a sliding track that has direction information and is generated by the finger of the user sliding on the touchpad 210.

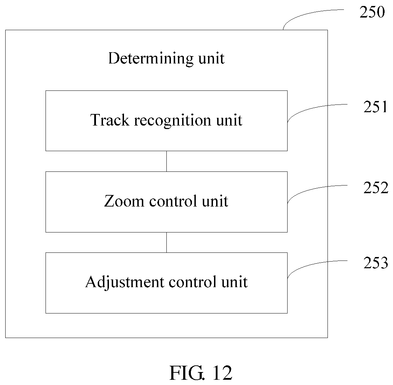

Optionally, as shown in FIG. 12, the determining unit 250 may include:
a track recognition unit 251, configured to determine a track length of the sliding track, and determine a slide direction of the sliding track according to the direction information;
a zoom control unit 252, configured to determine a focal length adjustment direction according to the slide direction, where the focal length adjustment direction includes zooming in to increase the focal length and zooming out to decrease the focal length; and
an adjustment control unit 253, configured to determine, according to the track length and a preset correspondence between a track length and a focal length adjustment amount, a focal length adjustment amount corresponding to the track length, and obtain the focal length adjustment instruction that includes the focal length adjustment direction and the focal length adjustment amount; or
alternatively, a track recognition unit 251, configured to determine a relative track length of the sliding track, and determine a slide direction of the sliding track according to the direction information, where the relative track length is a track length of the finger of the user sliding from a position at which the finger of the user is located when a last focal length adjustment instruction is generated to a current position of the finger of the user;
a zoom control unit 252, configured to determine a focal length adjustment direction according to the slide direction, where the focal length adjustment direction includes zooming in to increase the focal length and zooming out to decrease the focal length; and
an adjustment control unit 253, configured to determine whether the track length reaches a preset unit length, and if the unit length is reached, generate the focal length adjustment instruction, where the focal length adjustment instruction includes the focal length adjustment direction and a preset unit focal length adjustment amount, and the determining a slide direction and a relative track length of the sliding track is re-executed by the track recognition unit.

Optionally, the sliding track includes a circular track or a straight-line track.

If the sliding track is the circular track, the slide direction is an anti-clockwise direction or a clockwise direction; or
if the sliding track is the straight-line track, the slide direction includes a first direction and a second direction, where one of the first direction and the second direction is a rightward direction along a horizontal direction of the display of the mobile terminal, and the other one is a leftward direction along the horizontal direction of the display; or one of the first direction and the second direction is a rightward direction along a vertical direction of the display, and the other one is a leftward direction along the vertical direction of the display.

Optionally, if the sliding track is the circular track, the zoom control unit 252 may be specifically configured to:
if the slide direction is the anti-clockwise direction, determine that the focal length adjustment direction is zooming out to decrease the focal length; or if the slide direction is the clockwise direction, determine that the focal length adjustment direction is zooming in to increase the focal length; or
if the slide direction is the anti-clockwise direction, determine that the focal length adjustment direction is zooming in to increase the focal length; or if the slide direction is the clockwise direction, determine that the focal length adjustment direction is zooming out to decrease the focal length; or
if the sliding track is the straight-line track, the zoom control unit is specifically configured to:
   if the slide direction is the first direction, determine that the focal length adjustment direction is zooming in to increase the focal length; or if the slide direction is the second direction, determine that the focal length adjustment direction is zooming out to decrease the focal length.

Optionally, if the operation is a tap operation, the collection unit 240 is specifically configured to:
obtain a quantity of taps of the tap operation performed by the finger of the user on the touchpad 210.

Optionally, the quantity of taps includes a tap and a double-tap, and the determining unit 250 may be specifically configured to:
if the tap operation is the tap, generate a focal length adjustment instruction that is used to instruct to zoom in to increase the focal length according to a preset unit focal length adjustment amount; or if the tap operation is the double-tap, generate a focal length adjustment instruction that is used to instruct to zoom out to decrease the focal length according to the unit focal length adjustment amount; or
if the tap operation is the tap, generate a focal length adjustment instruction that is used to instruct to zoom out to decrease the focal length according to the unit focal length adjustment amount; or if the tap operation is the double-tap, generate a focal length adjustment instruction that is used to instruct to zoom in to increase the focal length according to the unit focal length adjustment amount.

Optionally, the touchpad 210 may be a rear-facing fingerprint touchpad or a front-facing fingerprint touchpad.

This embodiment is used to implement the foregoing method embodiments. For working procedures and working principles of all units in this embodiment, refer to descriptions in the foregoing method embodiments, and details are not repeatedly described herein.

This embodiment of the present invention provides a mobile terminal, where the mobile terminal includes a touchpad. When the mobile terminal enters a camera application program and displays a shooting preview screen on a display of the mobile terminal, a focal length adjustment start instruction triggered by a user touching the touchpad is received. The focal length adjustment start instruction is executed, and a focal length indication bar is displayed on the display and is used to prompt the user a degree of focal length adjustment. When a finger of the user starts to move on the touchpad, gesture touch information, such as a sliding track or a quantity of taps, generated by the finger of the user operating on the touchpad is obtained. Then, a focal length adjustment instruction corresponding to the gesture touch information is determined. Finally, a focal length is adjusted according to the focal length adjustment instruction, and an image that is captured after the focal length is adjusted is displayed on the shooting preview screen. It can be seen that the user can adjust a photographing focal length only by using one finger, so that problems of picture jitter and obstructing a user preview resulting from that one hand holds a mobile terminal and the other hand performs a focal length adjustment operation to adjust a focal length can be resolved.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for adjusting a photographing focal length of a mobile terminal by using a touchpad, wherein the method is applied to a mobile terminal, the mobile terminal comprises a touchpad, and the method comprises:
when the mobile terminal enters a camera application program and displays a shooting preview screen on a display of the mobile terminal, triggering generation of a focal length adjustment start instruction if a user touches the touchpad;
executing the focal length adjustment start instruction, and displaying a focal length indication bar on the display, wherein the focal length indication bar is used to prompt the user a degree of focal length adjustment;
when a finger of the user starts to move on the touchpad, obtaining gesture touch information generated by the finger of the user operating on the touchpad;
determining a focal length adjustment instruction corresponding to the gesture touch information; and
adjusting a focal length according to the focal length adjustment instruction, and displaying, on the shooting preview screen, an image that is captured after the focal length is adjusted.

2. The method according to claim 1, wherein if the operation is a slide operation, the obtaining gesture touch information generated by the finger of the user operating on the touchpad comprises:
obtaining a sliding track that has direction information and is generated by the finger of the user sliding on the touchpad.

3. The method according to claim 2, wherein the determining a focal length adjustment instruction corresponding to the gesture touch information comprises:
determining a track length of the sliding track, and determining a slide direction of the sliding track according to the direction information;
determining a focal length adjustment direction according to the slide direction, wherein the focal length adjustment direction comprises zooming in to increase the focal length and zooming out to decrease the focal length; and
determining, according to the track length and a preset correspondence between a track length and a focal length adjustment amount, a focal length adjustment amount corresponding to the track length, and obtaining the focal length adjustment instruction that comprises the focal length adjustment direction and the focal length adjustment amount.

4. The method according to claim 3, wherein the sliding track comprises a circular track or a straight-line track; and
if the sliding track is the circular track, the slide direction is an anti-clockwise direction or a clockwise direction; or
if the sliding track is the straight-line track, the slide direction comprises a first direction and a second direction, wherein one of the first direction and the second direction is a rightward direction along a horizontal direction of the display of the mobile terminal, and the other one is a leftward direction along the horizontal direction of the display; or one of the first direction and the second direction is a rightward direction along a vertical direction of the display, and the other one is a leftward direction along the vertical direction of the display.

5. The method according to claim 4, wherein if the sliding track is the circular track, the determining a focal length adjustment direction according to the slide direction comprises:
if the slide direction is the anti-clockwise direction, determining that the focal length adjustment direction is zooming out to decrease the focal length; or if the slide direction is the clockwise direction, determining that the focal length adjustment direction is zooming in to increase the focal length; or
if the slide direction is the anti-clockwise direction, determining that the focal length adjustment direction is zooming in to increase the focal length; or if the slide direction is the clockwise direction, determining that the focal length adjustment direction is zooming out to decrease the focal length; or
if the sliding track is the straight-line track, the determining a focal length adjustment direction according to the slide direction comprises:
if the slide direction is the first direction, determining that the focal length adjustment direction is zooming in to increase the focal length; or if the slide direction is the second direction, determining that the focal length adjustment direction is zooming out to decrease the focal length.

6. The method according to claim 1, wherein if the operation is a tap operation, the obtaining gesture touch information generated by the finger of the user operating on the touchpad comprises:
obtaining a quantity of taps of the tap operation performed by the finger of the user on the touchpad.

7. The method according to claim 6, wherein the quantity of taps comprises a tap and a double-tap, and the determining a focal length adjustment instruction corresponding to the gesture touch information comprises:
if the tap operation is the tap, generating a focal length adjustment instruction that is used to instruct to zoom in to increase the focal length according to a preset unit focal length adjustment amount; or if the tap operation is the double-tap, generating a focal length adjustment instruction that is used to instruct to zoom out to decrease the focal length according to the unit focal length adjustment amount; or
if the tap operation is the tap, generating a focal length adjustment instruction that is used to instruct to zoom out to decrease the focal length according to a unit focal length adjustment amount; or if the tap operation is the double-tap, generating a focal length adjustment instruction that is used to instruct to zoom in to increase the focal length according to the unit focal length adjustment amount.

8. The method according to any one of claims 1 to 7, wherein the touchpad is a rear-facing fingerprint touchpad or a front-facing fingerprint touchpad.

9. A mobile terminal, wherein the mobile terminal comprises a touchpad, and the mobile terminal further comprises:
a triggering unit, configured to: when the mobile terminal enters a camera application program and displays a shooting preview screen on a display of the mobile terminal, receive a focal length adjustment start instruction triggered by a user touching the touchpad;
a display unit, configured to execute the focal length adjustment start instruction, and display a focal length indication bar on the display, wherein the focal length indication bar is used to prompt the user a degree of focal length adjustment;
a collection unit, configured to: when a finger of the user starts to move on the touchpad, obtain gesture touch information generated by the finger of the user operating on the touchpad;
a determining unit, configured to determine a focal length adjustment instruction corresponding to the gesture touch information; and
a processing unit, configured to adjust a focal length according to the focal length adjustment instruction, and display, on the shooting preview screen, an image that is captured after the focal length is adjusted.

10. The mobile terminal according to claim 9, wherein if the operation is a slide operation, the collection unit is specifically configured to:
obtain a sliding track that has direction information and is generated by the finger of the user sliding on the touchpad.

11. The mobile terminal according to claim 10, wherein the determining unit comprises:
a track recognition unit, configured to determine a track length of the sliding track, and determine a slide direction of the sliding track according to the direction information;
a zoom control unit, configured to determine a focal length adjustment direction according to the slide direction, wherein the focal length adjustment direction comprises zooming in to increase the focal length and zooming out to decrease the focal length; and
an adjustment control unit, configured to determine, according to the track length and a preset correspondence between a track length and a focal length adjustment amount, a focal length adjustment amount corresponding to the track length, and obtain the focal length adjustment instruction that comprises the focal length adjustment direction and the focal length adjustment amount.

12. The mobile terminal according to claim 9, wherein if the operation is a tap operation, the collection unit is specifically configured to:
obtain a quantity of taps of the tap operation performed by the finger of the user on the touchpad.

13. The mobile terminal according to claim 12, wherein the quantity of taps comprises a tap and a double-tap, and the determining unit is specifically configured to:
if the tap operation is the tap, generate a focal length adjustment instruction that is used to instruct to zoom in to increase the focal length according to a preset unit focal length adjustment amount; or if the tap operation is the double-tap, generate a focal length adjustment instruction that is used to instruct to zoom out to decrease the focal length according to the unit focal length adjustment amount; or
if the tap operation is the tap, generate a focal length adjustment instruction that is used to instruct to zoom out to decrease the focal length according to the unit focal length adjustment amount; or if the tap operation is the double-tap, generate a focal length adjustment instruction that is used to instruct to zoom in to increase the focal length according to the unit focal length adjustment amount.

14. The mobile terminal according to any one of claims 9 to 13, wherein the touchpad is a rear-facing fingerprint touchpad or a front-facing fingerprint touchpad.

15. A mobile terminal, wherein the mobile terminal comprises a touchpad, and the mobile terminal further comprises a processor and a memory; the processor and the memory are connected by using a bus, the memory is configured to store a software program, the processor is configured to execute the software program, and the processor executes the software program to:
when the mobile terminal enters a camera application program and displays a shooting preview screen on a display of the mobile terminal, receive a focal length adjustment start instruction triggered by a user touching the touchpad;
execute the focal length adjustment start instruction, and display a focal length indication bar on the display, wherein the focal length indication bar is used to prompt the user a degree of focal length adjustment;
when a finger of the user starts to move on the touchpad, obtain gesture touch information generated by the finger of the user operating on the touchpad;
determine a focal length adjustment instruction corresponding to the gesture touch information; and
adjust a focal length according to the focal length adjustment instruction, and display, on the shooting preview screen, an image that is captured after the focal length is adjusted.

16. The mobile terminal according to claim 15, wherein if the operation is a slide operation, the processor executes the software program to specifically:
obtain a sliding track that has direction information and is generated by the finger of the user sliding on the touchpad.

17. The mobile terminal according to claim 16, wherein the processor executes the software program to specifically:
determine a track length of the sliding track, and determine a slide direction of the sliding track according to the direction information;
determine a focal length adjustment direction according to the slide direction, wherein the focal length adjustment direction comprises zooming in to increase the focal length and zooming out to decrease the focal length; and
determine, according to the track length and a preset correspondence between a track length and a focal length adjustment amount, a focal length adjustment amount corresponding to the track length, and obtain the focal length adjustment instruction that comprises the focal length adjustment direction and the focal length adjustment amount.

18. The mobile terminal according to claim 15, wherein if the operation is a tap operation, the processor executes the software program to specifically:
obtain a quantity of taps of the tap operation performed by the finger of the user on the touchpad.

19. The mobile terminal according to claim 18, wherein the quantity of taps comprises a tap and a double-tap, and the processor executes the software program to specifically:
if the tap operation is the tap, generate a focal length adjustment instruction that is used to instruct to zoom in to increase the focal length according to a preset unit focal length adjustment amount; or if the tap operation is the double-tap, generate a focal length adjustment instruction that is used to instruct to zoom out to decrease the focal length according to the unit focal length adjustment amount; or
if the tap operation is the tap, generate a focal length adjustment instruction that is used to instruct to zoom out to decrease the focal length according to the unit focal length adjustment amount; or if the tap operation is the double-tap, generate a focal length adjustment instruction that is used to instruct to zoom in to increase the focal length according to the unit focal length adjustment amount.

20. The mobile terminal according to any one of claims 15 to 19, wherein the touchpad is a rear-facing fingerprint touchpad or a front-facing fingerprint touchpad.
